Europäisches Patentamt

(19) European Patent Office

Office européen des brevets

(11) Veröffentlichungsnummer: **0 005 759
B1**

(12) **EUROPÄISCHE PATENTSCHRIFT**

(45) Veröffentlichungstag der Patentschrift:
01.04.81

(51) Int. Cl.³: **H 04 B 3/20**

(21) Anmeldenummer: **79101478.0**

(22) Anmeldetag: **15.05.79**

(54) **Echosperre.**

(30) Priorität: **18.05.78 DE 2821743**

(43) Veröffentlichungstag der Anmeldung:
**12.12.79 Patentblatt 79/25**

(45) Bekanntmachung des Hinweises auf die Patenterteilung:
**01.04.81 Patentblatt 81/13**

(84) Benannte Vertragsstaaten:
**AT BE CH DE FR GB IT LU NL SE**

(56) Entgegenhaltungen:
**SIEMENS ZEITSCHRIFT, Band 41,
Nr. 9, 1967,
Erlangen
BUCHMANN: «Echosperre für Fernsprechweitverbindungen»,
Seiten 772-774.**

(73) Patentinhaber: **SIEMENS AKTIENGESELLSCHAFT Berlin
und München, Postfach 22 02 61, D-8000 München 22 (DE)**

(72) Erfinder: **von Pfeil, Dirsko, Dammstrasse 14,
D-8021 Hohenschäftlarn (DE)**

## Echosperre

Die Erfindung betrifft eine Echosperre mit einer Vergleichsschaltung zur pegelabhängigen Beeinflussung von Sende- und Empfangsweg und einer die Beeinflussung ausführenden Steuerschaltung, sowie einen eingangs mit dem Sende- und Empfangsweg und ausgangsseitig mit der Steuerschaltung verbundenen Tonempfänger zur Blockierung der Steuerschaltung.

Eine derartige Echosperre ist aus der Siemens Zeitschrift, Bd. 41, Nr. 9, 1967, bekannt.

Echosperren müssen bei der Übertragung von Daten in beiden Richtungen gleichzeitig (Duplexbetrieb) unwirksam geschaltet werden. Das Unwirksamschalten bewirken Tonempfänger, die auf ein Tonfrequenzsignal ansprechen, das während der Aufbauphase der Datenverbindung von den Datengeräten ausgesendet wird. Die Tonempfänger müssen auf Signale in Sende- und Empfangsweg reagieren. Sie sind sprachgeschützt, um ein fehlerhaftes Unwirksamschalten bei Sprechverbindungen zu vermeiden.

Bei analogen Echosperren erfolgt die Anschaltung des Tonempfängers an Sende- und Empfangsweg über zwei Entkopplungsverstärker. Nachteilig an dieser Schaltung ist, dass während des Empfanges eines Nutzzeichens z.B. im Sendeweg gleichzeitig das Geräusch des Empfangsweges zum Empfänger gelangt. Wegen des Sprachschutzes kann der Empfänger relativ leicht durch das Geräusch blockiert werden. Ausserdem kann der Rückfluss des Nutzsignales einen zusätzlichen störenden Einfluss bringen.

Bei digitalen Echosperren ist eine vorzeichenrichtige Addition der beiden Signale aus Sende- und Empfangsrichtung relativ aufwendig. Da digitale Echosperren im Zeitmultiplex arbeiten, verdoppelt man lieber die Arbeitsgeschwindigkeit und die Speicherplätze des Tonempfängers und schaltet ihn abwechselnd an Sende- und Empfangsweg an. Trotzdem ist der Mehraufwand für die funktionsmässige Verdopplung nicht zu vernachlässigen.

Aufgabe der vorliegenden Erfindung ist es, den Aufwand zur Unwirksamschaltung einer Echosperre zu verringern.

Zur Lösung dieser Aufgabe wird die Echosperre gemäss der Erfindung derart ausgebildet, dass der Tonempfänger eingangsseitig über einen Umschalter, der abhängig vom Ausgang der Vergleichsschaltung gesteuert wird, bei Vorliegen einer Tonspannung auf dem Sendeweg an den Sendeweg und bei Vorliegen einer Tonspannung auf dem Empfangsweg an den Empfangsweg geschaltet ist.

Durch diese Massnahmen erhält man eine Echosperre, bei der nur ein Tonempfänger verwendet werden muss, wobei eine gute Entkopplung zwischen Sende- und Empfangsrichtung erreicht wird, da der Eingang des Tonempfängers über den Umschalter jeweils an den Sprechweg gelegt wird, der den höheren Pegel führt. Dabei wird gleichzeitig die Vergleichsschaltung für die Steuerung der Schalter in der Echosperre, der sowieso vorhanden ist, mitausgenützt.

Eine Beeinflussung durch Geräusch der Gegenrichtung oder Rückfluss besteht nicht, solange der Pegel unter dem Pegel des Nutzsignales liegt.

Eine erhebliche Einsparung wird durch diese Lösung vor allem bei digitalen Echosperren erreicht.

Anhand der Schaltungen nach Fig. 1 und 2 und des Ausführungsbeispiels nach Fig. 3 wird die Erfindung näher erläutert.

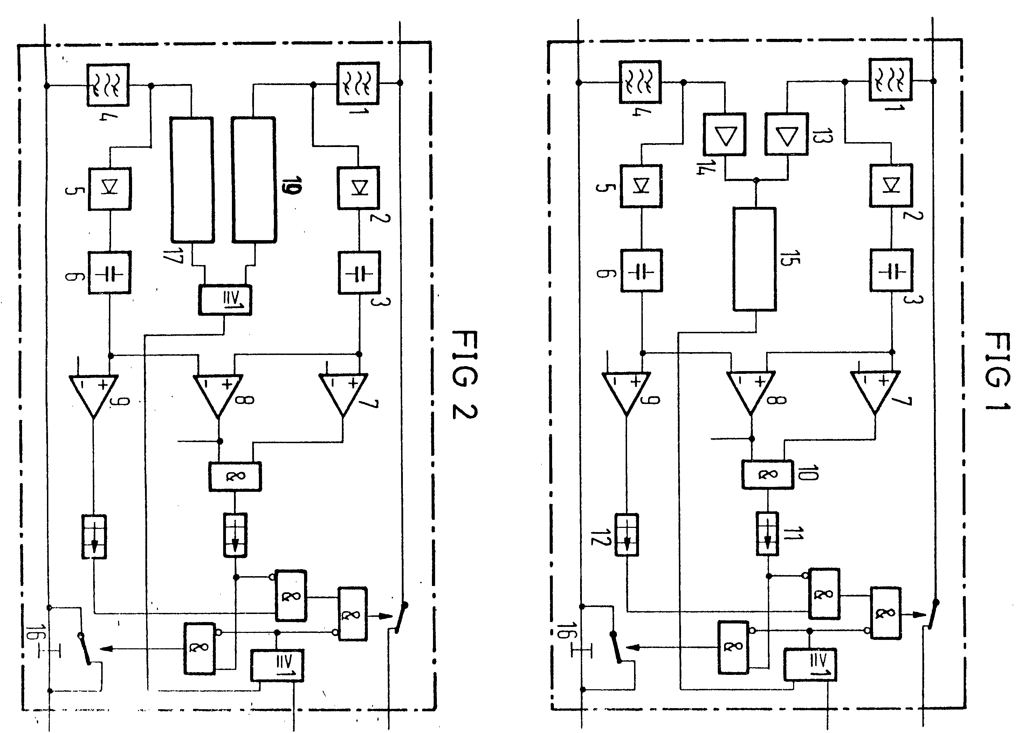

In der Fig. 1 ist eine bekannte Echosperre gezeigt, wobei der Sendeweg über einen Bandpass 1, einen Gleichrichter 2 und Siebglied 3 und der Empfangsweg über einen Bandpass 4, einen Gleichrichter 5 und Siebglied 6 jeweils mit dem nichtinvertierenden Eingang jeweils eines Differenzverstärkers 7 und 9 verbunden ist. Der invertierende Eingang der beiden Differenzverstärker liegt dabei jeweils an einer Vergleichsspannung. Gleichzeitig ist ein weiterer Differenzverstärker 8 mit seinem nichtinvertierenden Eingang mit dem Ausgang des Gleichrichters im Sendeweg und mit seinem invertierenden Eingang mit dem Ausgang des Gleichrichters im Empfangsweg verbunden. Alle Differenzverstärker wirken als Vergleicher oder Komparator. Ausgangsseitig sind der Differenzverstärker 7 und der Differenzverstärker 8 an die Eingänge einer UND-Schaltung geführt, während der Ausgang des Differenzverstärkers 9 über ein Verzögerungsglied 12 an den Eingang einer aus mehreren Gattern bestehenden Steuerschaltung geführt ist. Der Ausgang des UND-Gliedes 10 ist ebenfalls über ein Verzögerungsglied 11 an den Eingang der Steuerschaltung geführt. Die Steuerschaltung weist ausserdem zwei weitere Eingänge auf, wobei an dem einen eine externe Unwirksamschaltung vorgenommen werden kann, während am zweiten der Ausgang eines Tonempfängers 15 liegt, der eingangsseitig über zwei Trennverstärker 13 und 14 jeweils mit dem Ausgang des sende- und empfangsseitigen Bandpasses verbunden ist.

Die Echosperre wirkt dabei so, dass jeweils diejenige Richtung, in der Sprachsignale übertragen werden, durchgeschaltet und die andere mittels eines Schalters gesperrt ist.

Wird in beiden Richtungen gleichzeitig gesprochen, so wird durch die Vergleichsschaltung 8 bewirkt, dass bei Überwiegen des Pegels im Sendeweg dieser durchgeschaltet und der Empfangsweg über das Empfangsglied 16 gedämpft ist. Dadurch ist der gleichzeitige Gegensprechverkehr mit etwas erhöhter Restdämpfung (entsprechend Dämpfung 16) gewährleistet, ohne dass ein nennenswertes Echo entstehen kann, weil dieses mindestens doppelt gedämpft wird.

Diese für die Sprachübertragung wirksame Echosperre muss jedoch bei Datenübertragung in beiden Richtungen unwirksam geschaltet werden, was durch den Tonempfänger 15 erfolgt, der auf während der Aufbauphase einer Datenverbindung von den Datengeräten ausgesendeten Tonfrequenz beeinflusst wird.

Fig. 2 zeigt die Anschaltung eines Tonempfängers für digitale Echosperren, wobei der funktionsmässige Aufwand des Tonempfängers verdoppelt werden muss, wenn man nicht eine aufwendige Schaltung zur vorzeichenrichtigen Addition der Pegel im Sende- und Empfangsweg in Kauf nehmen will.

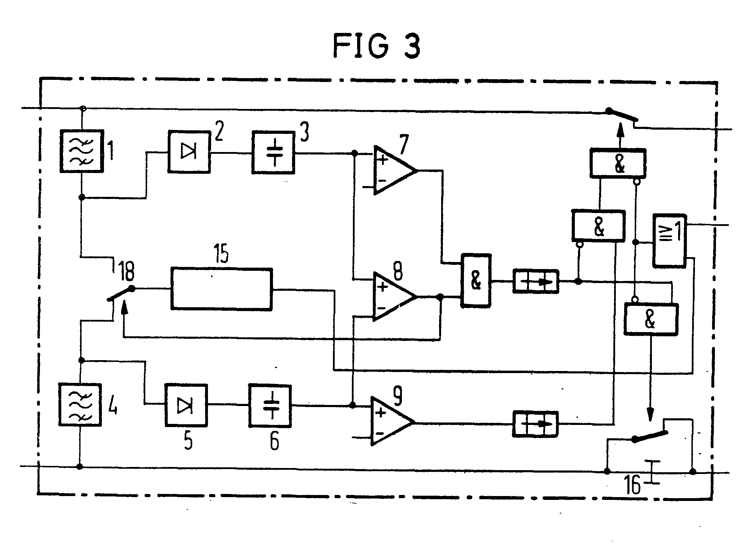

Die Anordnung nach Fig. 3 zeigt die Ausführung nach der Erfindung, wobei der Tonempfänger 15 über einen Umpoler 18 mit dem Sende- und Empfangsweg verbunden ist. Der Umschalter 18 wird dabei in Abhängigkeit vom Ausgang der Vergleichsschaltung 8 gesteuert, so dass eine pegelabhängige Anschaltung des Tonempfängers an den Sende- oder Empfangsweg erfolgt.

## Patentanspruch

Echosperre mit einer Vergleichsschaltung (8) zur pegelabhängigen Beeinflussung von Sende- und Empfangsweg und einer die Beeinflussung ausführenden Steuerschaltung, sowie einen eingangs mit dem Sende- und Empfangsweg und ausgangsseitig mit der Steuerschaltung verbundenen Tonempfänger (15, 17, 19) zur Blockierung der Steuerschaltung, dadurch gekennzeichnet, dass der Tonempfänger (15) eingangsseitig über einen Umschalter (18), der abhängig vom Ausgang der Vergleichsschaltung (8) gesteuert wird, bei Vorliegen einer Tonspannung auf dem Sendeweg an den Sendeweg und bei Vorliegen einer Tonspannung auf dem Empfangsweg an den Empfangsweg geschaltet ist.

## Claim

Echo suppressor comprising a comparator circuit (8) for the level-dependent control of the transmitting path and receiving path, and a control circuit which carries out the control, and a tone receiver (15, 17, 19) which is connected at the input end to the transmitting path and receiving path and at the output end to the control circuit, for blocking the control circuit, characterised in that the input of the tone receiver (15) is connected via a change-over switch (18), which is controlled in dependence upon the output of the comparator circuit (8), to the transmitting path when a tone voltage is present on the transmitting path and to the receiving path when a tone voltage is present on the receiving path.

## Revendication

Suppresseur d'écho comportant un circuit comparateur (8) permettant d'influencer, en fonction du niveau, la voie d'émission et la voie de réception, et un circuit de commande pour réaliser cette influence, ainsi qu'un récepteur de signaux acoustiques (15, 17, 19) relié du côté entrée à la voie d'émission et à la voie de réception et du côté sortie au circuit de commande, en vue de bloquer ce dernier, caractérisé par le fait que, du côté entrée, le récepteur de signaux acoustiques (15) est raccordé, par l'intermédiaire d'un inverseur (18) qui est commandé en fonction de la sortie du circuit comparateur (8), à la voie d'émission lors de la présence d'une tension de signal acoustique dans la voie d'émission, et à la voie de réception lors de la présence d'une tension du signal acoustique dans la voie de réception.

## FIG 1

## FIG 2

# FIG 3